# EUROPEAN PATENT APPLICATION

(11) **EP 4 835 350 A1**
(43) Date of publication of application: **04.11.2026**
(21) Application number: 25172434.0
(22) Date of filing: 24.04.2025
(51) Int. Cl.: F21V 9/02, F21S 8/00, G02B 3/00

(54) **ARTIFICIAL SKYLIGHT**

(71) Applicant: Hologlaze Ltd., Bourne End SL8 5TD (GB)
(72) Inventor: FLYNN, Sean, Gloucestershire, GL2 0RP (GB); DHATT, Kamaldip Singh, Bourne End, SL8 5TD (GB)
(74) Representative: Games, Robert Harland

(57) **Abstract**

An artificial skylight (100) for simulating a sky scene at optical infinity, the artificial skylight comprising a panel having a first layer and a second layer, and a diffusive light source (3) for illuminating the first and second layers, in which:
the first layer comprises an array of repeating translucent and/or opaque images (5) printed on a transparent substrate; and
the second layer comprises an array of lenses (4), in which the pitch of the array of lenses is substantially the same as that of the array of images, and
in which the first layer is disposed behind the second layer, the first layer being spaced from and parallel with the second layer, and the first and second layers being relatively positioned so that the array of images is rotationally aligned with the array of lenses, and the diffusive light source being disposed behind the first layer,
and in which the artificial skylight comprises one or both of:
a) lenses (4) having a diameter of less than approximately 1 mm; and
b) a diffuser (121) positioned in front of the second layer for diffusing incident light that has passed through one or more of the lenses (4).

## Description

The present invention relates to an artificial skylight and a method of manufacturing an artificial skylight.

### BACKGROUND TO THE INVENTION

Artificial skylights are primarily used in windowless spaces to artificially replicate the appearance of the sky and emulate natural sunlight. Benefits include improved eye health, enhanced mental wellbeing, and alleviation of claustrophobia. Humans are instinctively drawn to brightly lit areas, especially when accompanied by natural views. Artificial skylights satisfy that need when real windows are impractical or simply not an option.

Artificial skylights emulating natural daylight with a clear sky are well known. Some artificial skylights attempt to display back-lit cloud images. However, reproducing a convincing rendered image of a cloud-strewn sky at optical infinity (i.e., where an image of the sky and clouds is perceived as being far away so that the eye will adjust to infinity focus) has proven very difficult.

To enhance the illusion of the artificial cloud-strewn sky, it is advantageous to have the images of clouds moving through the sky and to have the colour of the sky change over time. This is achievable with dynamic displays such as plasma screens, however the images appear flat and unconvincing. Additionally, to function as a skylight, the artificial skylight needs to produce bright light, and plasma screens are an inefficient light source.

Known integral imaging displays, also known as "integral displays" or "fly-eye displays" are used to generate 3D images at relatively short depths of field. Using this approach, a credible autostereoscopic image can be rendered, permitting 'look around' and parallax.

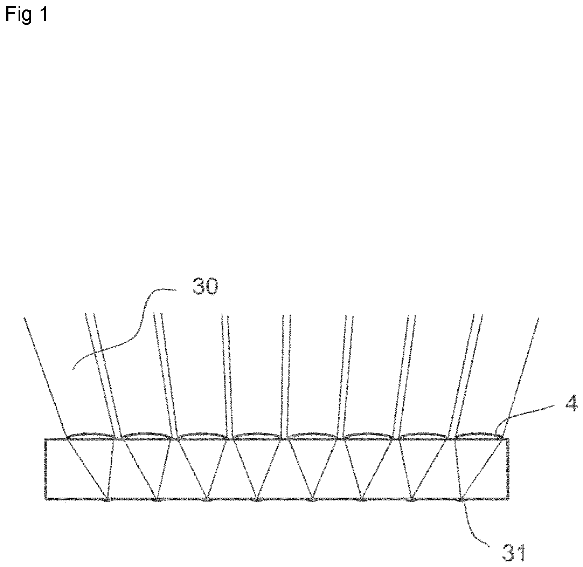

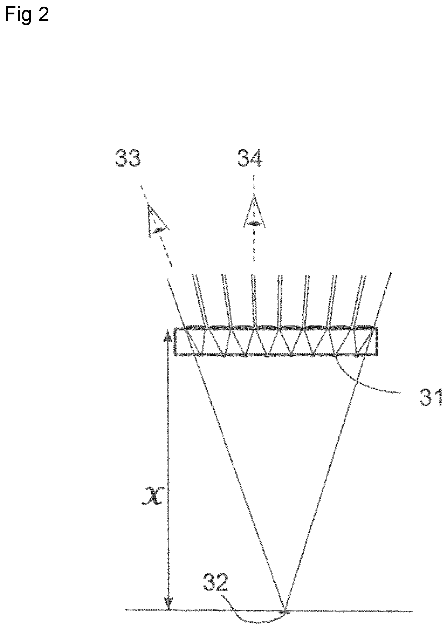

A conventional integral display is shown in Figures 1 and 2. Typically, integral displays include an array of images 31 of a scene captured from various viewing angles. The images 31 are placed behind a lens array in which each lens 4 magnifies the image 31 directly underneath it. When light from any given point on an image passes through its assigned lens, its divergence angle is reduced, becoming almost but not quite, a cylinder of light 30. In other words, its light cone becomes substantially collimated.

As shown in Figure 2, when the light paths from each image are traced back to a "virtual image" 32 (i.e., a single magnified image of one of the array of images), it is perceived as being some distance x behind the lens array. In this manner, depending on the pitch of the array of images, depth fields are created. It can be seen that under these conditions a rendered image at some distance x is perceived to be a stationary, single virtual image from various viewing angles. When viewed from the side 33 or even when viewed between lenses 34, the virtual image does not change its position in space. This is because the cone of light passing through each lens never intersects its neighbour, notwithstanding cross-talk caused by lens aberrations as discussed below.

In a conventional integral display, as shown in Figures 1 and 2, images 31 must be slightly closer together than the lens array 4 above them, i.e. the pattern of images is at a closer pitch than the pattern of lenses, in order to create a virtual image. As shown in Figures 3 and 4, if the images 31 were arrayed such that they shared the same pitch as the lenses 4, light cones 30 from each image constituting a rendered image would intersect due to the fact that you cannot have perfectly collimated light cones, as discussed below.

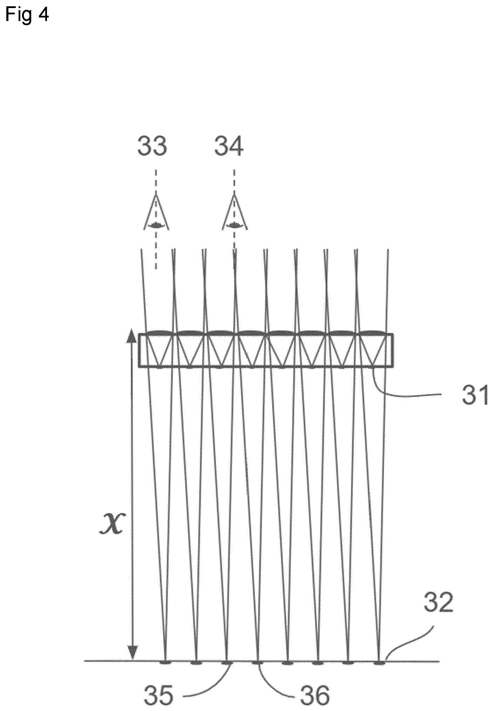

This has implications in terms of the quality of the rendered image. As shown in Figure 4, when viewing the rendered image at one position 33 the viewer may see a single virtual image, but from another viewing position 34, with the eye positioned between lenses, the viewer will see two magnified images 35, 36 both supposedly representing the same, singular, virtual image.

Consequently, an enlarged image is perceived, vaguely representative of the small images on the other side of the lens array but one beset with visual artefacts due to lens cross-talk. Artefactual issues generally include images "jumping" as the viewer transits past the array, and image degradation due to fragments of one image cross-talking into an adjacent lens.

Furthermore, images representing distant objects (i.e. objects at optical infinity) cannot be clearly rendered by an integral display as their light rays would have to be refracted such that they assume a parallel path to each other. In other words, the light rays must be perfectly collimated, i.e. completely parallel for the virtual image to be both clearly defined and perceived as being at optical infinity. However, even an optimised, aberration free lens cannot perfectly collimate peripheral images (i.e. there will always be some distortion off-axis). Consequently, rendered images representing distant objects are distorted, with images furthest from the optical axis experiencing greatest distortion.

To produce a clearly rendered image, the image plane must be positioned such that the distance between the image array and the lens array is less than its focal length. Consequently, rays from the images are refracted such that they assume a small angle of divergence. When images are quasi-collimated (i.e. when light rays from each image are almost but not quite parallel), as they are in conventional integral displays, image distortion is reduced to acceptable levels. However, this generally limits the depth of a rendered image to tens of centimetres at best and so cannot be used to create integral images at optical infinity.

It is an object of the present invention to reduce or substantially obviate the aforementioned problems.

### STATEMENT OF INVENTION

According to the present invention there is provided an artificial skylight for simulating a sky scene, the artificial skylight comprising a panel having a first layer and a second layer, and a diffusive light source for illuminating the first and second layers, in which:
the first layer comprises an array of repeating translucent and/or opaque images printed on a transparent substrate; and
the second layer comprises an array of lenses, in which the pitch of the array of lenses is substantially the same as that of the array of images, and
in which the first layer is disposed behind the second layer, the first layer being spaced from and parallel with the second layer, and the diffusive light source being disposed behind the first layer.

The pitch of the array of lenses may be between 0.2 mm and 1.5 mm. The pitch of the array of images may be between 0.2 mm and 1.5 mm.

The images may be, for example, irregularly shaped blue translucent features, with clear (substantially transparent) spaces in between. The array of images is a repeating pattern of these irregular shapes. The pitch of the repeating pattern is the same as the pitch of the array of lenses, along both dimensions of the two-dimensional layer. The arrays are also rotationally aligned, i.e. the axes along which the pattern repeats on each layer are oriented in the same direction.

An artificial skylight according to the present invention forms a rendered image which is an integral image. The array of images may comprise blue features representing a blue sky and the lenses may substantially collimate light rays (i.e. produce a small divergence angle, for example less than 15 degrees). As described above, use of a conventional integral display to produce a rendered image at optical infinity typically results in numerous artifactual issues. However, the inventor has found that a convincing image of a cloudy sky at optical infinity can be perceived at a normal viewing distance (assuming normal ceiling heights) of between 500 mm and 1000 mm.

In an embodiment, blue patches with clear spaces in between, and a white light source, provide a good simulation of a cloudy sky. In other embodiments, the images may include other colours and/or features designed to attenuate the light. For example, a white and somewhat opaque ink can be used to create patches which look like darker clouds, or shadows on clouds.

The array of lenses corresponds to the array of images. In other words, the images are disposed in a first geometric pattern and the lenses are disposed in a geometric pattern substantially the same as that of the array of images.

The lenses may include convex lenses. The lenses may be printed using UV ink. Printing the lenses minimises alignment errors. The UV ink may be cured when irradiated by UV light. The UV ink may be clear or substantially clear ink. The UV ink may take the form of a droplet of ink having a convex shape.

Preferably, the lenses on the second layer form an array with minimal or no space between adjacent lenses.

The lenses may each have a diameter of less than 5 mm, less than 4 mm, less than 3 mm, less than 2 mm, less than 1.5 mm or less than 1 mm.

The UV ink used to form each lens may have a volume in the range of 12x10⁶ picolitres to 32x10⁶ picolitres.

The lenses produce focused images. "Common" features are focused such that they are close together on the retina and appear indistinguishable. The term "common features" refers to features that occupy the same position in relation to the optic centre of their corresponding lens. In the present invention, the common features become merged and perceived as one rendered image positioned at optical infinity when focused onto the retina. The "jumps" from cross-talk are so small that only blurred images are observed as opposed to a mosaic of partially rendered images. While blurring is generally undesirable, the applicant has found that the image of clouds remains convincing because the edges of clouds, by their very nature, are not distinct. In other words, perfect or near perfect collimation of light is not required. However, the light may be at least partially collimated. Where collimation is achieved, the associated image distortion typically seen does not impact the believability of the resulting image for the same reason.

The artificial skylight may include a diffuser positioned in front of the second layer for diffusing incident light that has passed through one or more of the lenses. The diffuser may diffuse incident light to create a diffuse cone of light subtending a half-value diffusion angle, θ_{½} The diffuse cone may be isotropic i.e., the diffuse cone associated with a transiting ray may be symmetrical about the ray's incident angle.

A diffuser may be used to broaden light cones entering the eye such that common features, when brought to focus overlap or adjoin, to form one rendered image. This allows larger diameter lenses to be used while still achieving optical infinity. Where larger lenses are used, more detail may be included in the images.

In other words, the diffuser may diffuse the light to obscure common features such that a single rendered image is resolved. The diffusion may be sufficient to obscure the common features when viewed by an observer positioned at least 700mm away from the artificial skylight.

The diffuser may include 'surface featuring', in other words, the diffuser may include stippling or dimpling. Surface featuring generally produces a controlled diffusion cone of incident light.

The diffuser may include particles embedded within the diffuser to scatter light. The particles may be microscopic. The particles may include TiO₂.

The diffuser may be disposed between 5 to 400 mm from the second layer. The diffuser may be disposed between 5 to 150 mm from the second layer. The diffuser may be disposed between 5 to 50 mm from the second layer.

An angle of separation between adjacent blue features relative to an optic centre of a lens may be greater than the half-value diffusion angle, θ_{½} by one arc minute. The term "angle of separation" can refer to an angle subtending the optical axis of the lens and the edges of two adjacent blue features and/or the angle subtending the extremities of a blue feature at its minimum width and the optical axis of the lens. This allows adjacent blue features (i.e. blue features forming part of one image) to be separably resolvable and perceived as two patches of blue sky at optical infinity.

The angle of separation may be greater than 1.4θ_{½}*.*

The spacing between the first layer and the second layer may be in the range of 1 mm to 12 mm. The spacing between the first layer and the second layer may be in the range of 1 mm to 4 mm. A spacing in the range of 1 mm to 4 mm ensures the rendered image is repeated no more than three times within any given viewing aperture (i.e. a face of the panel itself), when the panel has a width of between 300 mm to 1200 mm and is viewed from approximately 700 mm away. Repetition of the rendered image more than three times produces a less convincing cloud scene.

The spacing (L) between the first layer and the second layer may be approximated using the following calculation: ${J}_{2} / {J}_{1} < 4$ Where:
J₁ = Arctan (S / (2 _{*} L));
J₂ = Arctan (A / (2 _{*} D)); and

A is the maximum aperture size (i.e. the width of the panel), S is separation of the lenses, i.e. their pitch, and D is the viewing distance.

Preferably, the panel has a width of approximately 600 mm and the spacing between the first layer and the second layer is approximately 2 mm.

Preferably, a face of the panel has a surface area of 0.25 m² to 0.75 m². This surface area allows the panel to function as part of an artificial skylight.

The spacing between the first layer and the second layer may be selected based on the width of the aperture (i.e. the panel) to ensure the rendered image is repeated no more than three times within the aperture.

The first layer may be provided on a first substantially transparent substrate. The second layer may be provided on a second substantially transparent substrate. The substantially transparent substrate allows light to pass through the substrate rather than partially blocking the light, which would otherwise produce a dimmer artificial skylight.

One of the first substantially transparent substrate and second substantially transparent substrate may be translatable with respect to the other of the first and second substantially transparent substrate. In other words, one of the first and second substantially transparent substrate may be moved independently without rotating or tilting either substrate which may otherwise disturb the rotational alignment. Translating one of the substantially transparent substrates creates the illusion of a dynamic scene of clouds moving through the sky.

One or both of the first and second substantially transparent substrates may be a flexible sheet. One or both of the first and second substantially transparent substrates may be disposed on one or more pulleys or rollers for moving the substrate. One substrate may for example scroll past the other substrate. This may allow one of the substrates to be translated with respect to the other substrate.

The transparent substrate may be rigid. The transparent substrate may be glass. The transparent substrate may be a polymeric material. For example, the transparent substrate may be acrylic.

The first layer may be provided on one side of a substantially transparent substrate. The second layer may be provided on an opposing side of the substantially transparent substrate. In other words, both layers may be printed on opposing sides of the same substrate. Printing the two layers on the same sheet allows the layers to remain in rotational alignment when the substrate changes shape or position. For example, the substrate may change shape as a consequence of a change in temperature.

The images may comprise UV ink. Use of UV ink is advantageous because the ink can be rapidly cured by irradiating the UV ink with UV light.

Each blue feature may include one or more blue dots. Blue dots are advantageous because they are relatively straightforward to print using a UV ink printer. The one or more blue dots may have a diameter of less than 1.5 mm. The one or more blue dots may have a diameter of less than 1 mm.

Each blue feature may include one or more irregular shapes. Irregular shapes are advantageous because they produce a more convincing image of a blue sky.

The diffusive light source may emit substantially white light. The white light source may illuminate clear areas of the first substrate (i.e. between the blue features) to represent clouds. The diffusive light source may have a variable corrected colour temperature (CCT) of between 1,500K and 17,000K. Varying the CCT changes the colour of the simulated clouds and sky (e.g. to simulate the Sun rising and setting). Varying the CCT may also be used to vary the brightness of the artificial skylight.

The first layer may comprise one or more white features. The first layer may comprise an array of white features. The one or more white features may comprise TiO₂. For example, the one or more white features may comprise TiO₂ pigment. The one or more white features may diminish the brightness of the light (e.g. they may be partially opaque), resulting in grey areas in the skylight. The grey areas may represent the underside of clouds and enhance the authenticity of the image of a cloudy sky.

The one or more white features may be printed next to, underneath or on top of one or more of the blue features. The white features may be printed next to, underneath or on top of each of the blue features.

Layering the blue and white features so that the white feature faces the light source, and the overlapping blue feature faces the viewer, is preferred because the white feature reflects light back towards the light source whereas the blue features absorb a greater proportion of the light. Layering the blue and white features in this way results in better light efficiency compared to layering white features on blue features. Depending on whether the features are printed on the side of the substrate facing towards the light source or the side of the substrate facing away from the light source, the blue features can be layered over or under the white features in the printing process.

A portion of a white feature may be disposed under or over a blue feature (i.e. between the blue feature and the first substrate). A portion of a white feature may be disposed next to a blue feature.

According to a second aspect of the present invention, there is provided a method of manufacturing an artificial skylight, the method comprising the steps of:
printing an array of images on a translucent or transparent substrate to form a first layer;
printing an array of lenses on the other side of the substrate, or on another substrate, to form a second layer parallel with the first layer, in which the array of lenses correspond to and are rotationally aligned with the array of images to form an integral image, in which the pitch of the array of images is substantially the same as that of the spacing between centres of adjacent lenses.

The advantages have been discussed with respect to the first aspect of the present invention.

The artificial skylight may have any feature or combination of features of the first aspect of the present invention.

The method may include the step of positioning a diffuser in front of the second layer for diffusing incident light that has passed through one or more of the lenses.

The images may be printed in UV ink. The method may comprise the step of curing the UV ink with UV light. UV ink cures almost instantaneously under UV light and so is preferred for manufacture.

The lenses may be printed in UV ink. The method may comprise the step of curing the UV ink with UV light. The droplets of clear ink may take a convex form.

The first layer may be printed on one side of a substantially transparent substrate. The second layer may be printed on an opposing side of the substantially transparent substrate. Printing the two layers on the same sheet allows the layers to remain in rotational alignment when the substrate undergoes a change in temperature.

The method may comprise the step of positioning the substantially transparent substrate on a bed of a UV printer. The substrate may be held within, held against, or otherwise constrained by a jig. For example, the substrate may abut positioning pins. The first layer may be printed on a first side of the substrate. The substrate may be flipped (i.e. upside down) to present the opposing side. The substrate may be held in the jig to ensure alignment between the layers. For example, the substrate may abut the same positioning pins.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a schematic of a conventional integral display of the prior art;
Figure 2 shows a schematic of the conventional integral display of Figure 1 viewed by an observer;

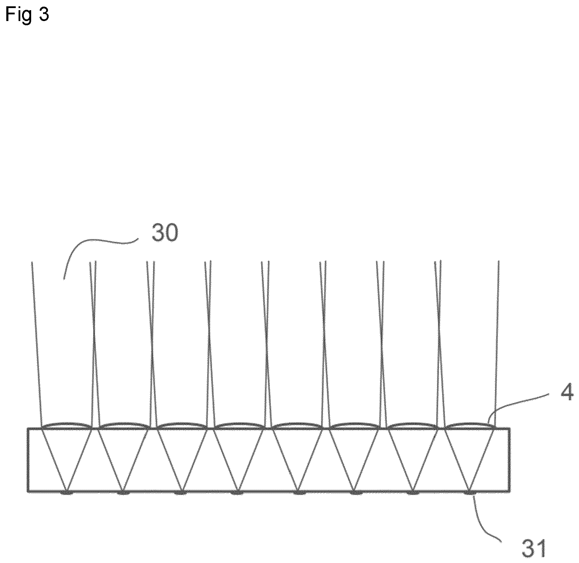

Figure 3 shows a schematic of a conventional integral display of the prior art but in which the spacing between images is the same as the spacing between the lenses;
Figure 4 shows a schematic of the integral display of Figure 3 viewed by an observer;

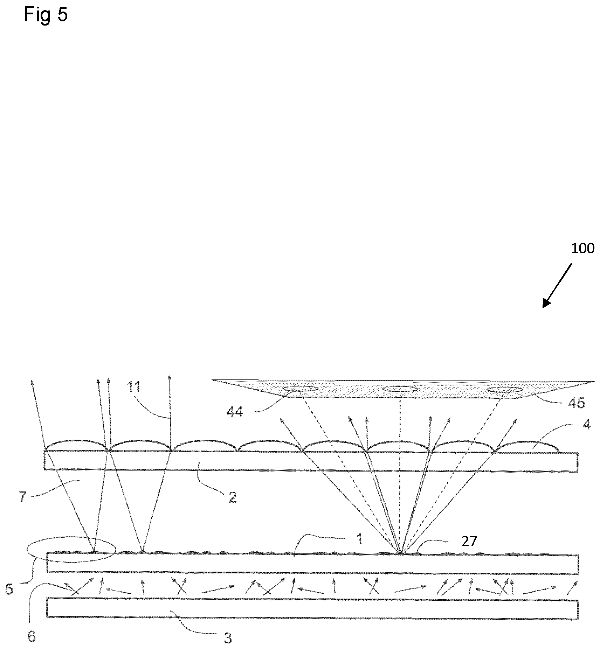

Figure 5 shows a schematic of a first embodiment of an artificial skylight according to the present invention;

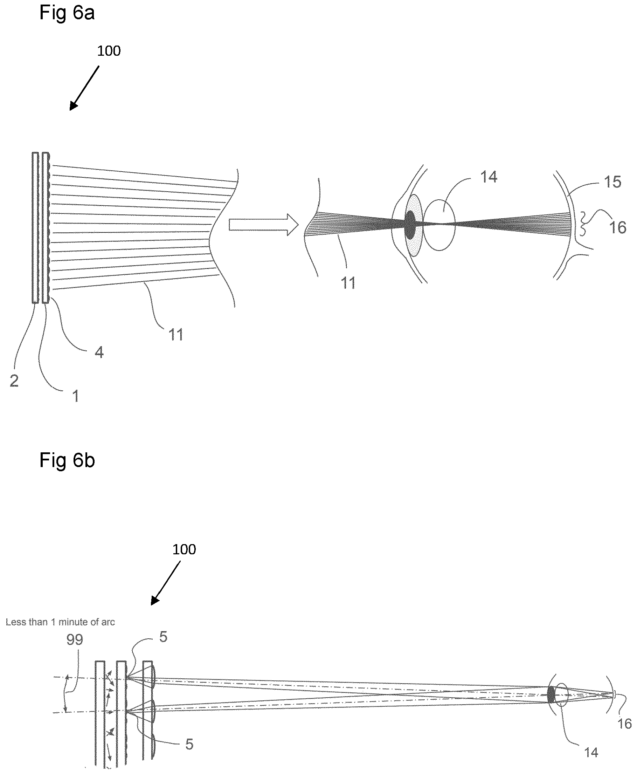

Figure 6a shows a schematic of the artificial skylight of Figure 5 viewed by an observer;
Figure 6b shows a schematic of the artificial skylight of Figure 5 viewed by an observer;

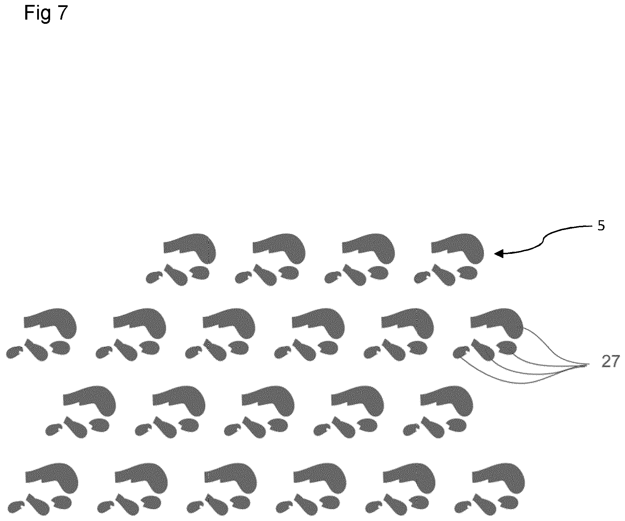

Figure 7 shows the array of images of Figure 5;

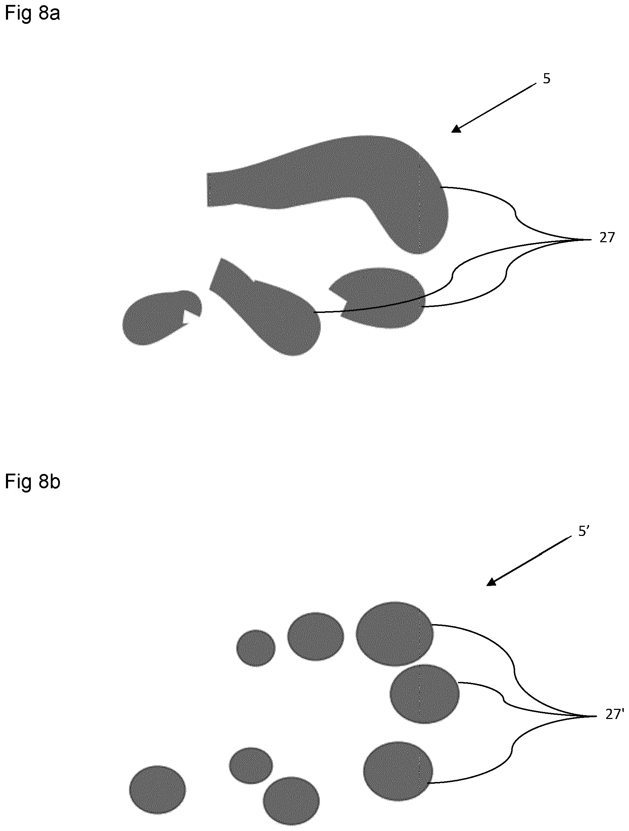

Figure 8a shows an image of Figure 7;
Figure 8b shows an alternative embodiment of an image;

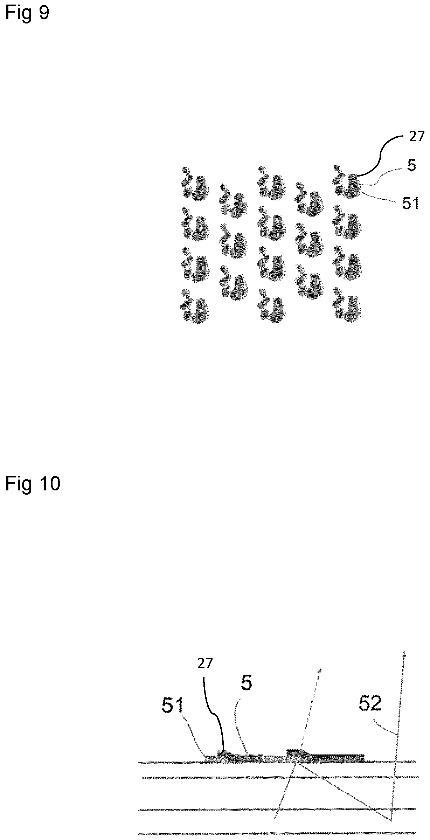

Figure 9 shows an alternative array of images;
Figure 10 shows a cross section of an image of Figure 9;

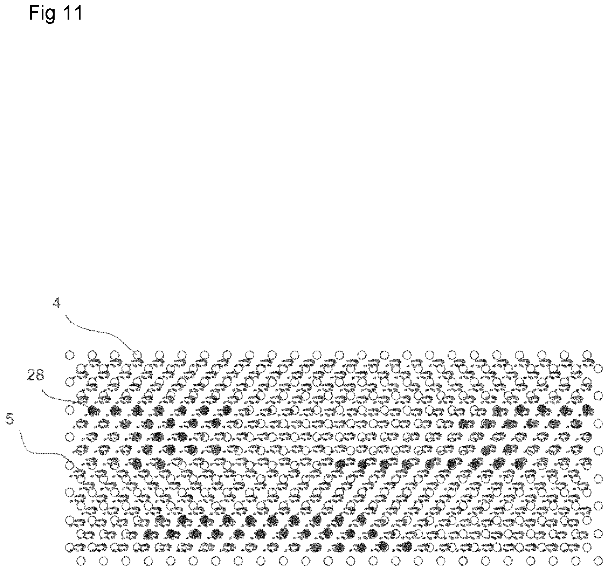

Figure 11 shows a front face of the artificial skylight of Figure 5;

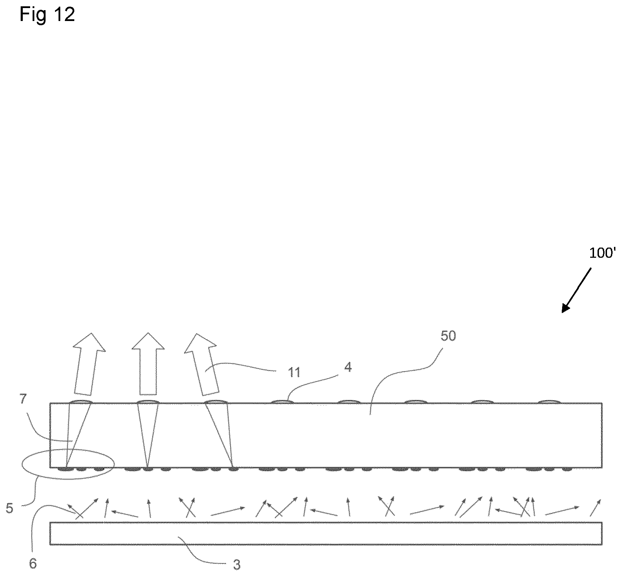

Figure 12 shows a schematic of a second embodiment of an artificial skylight according to the present invention;

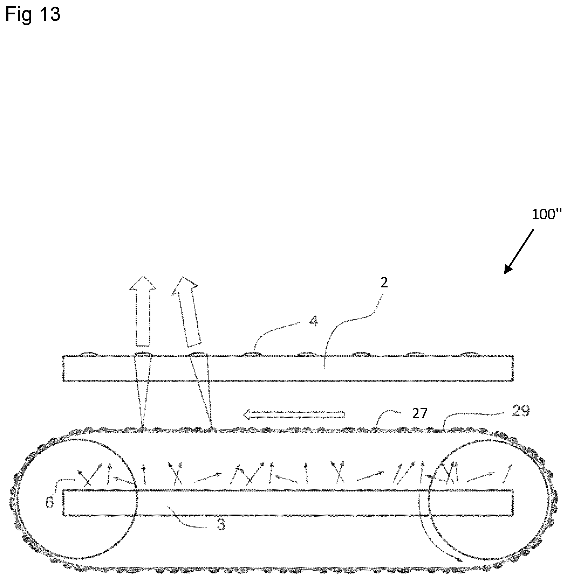

Figure 13 shows a schematic of a third embodiment of an artificial skylight according to the present invention;

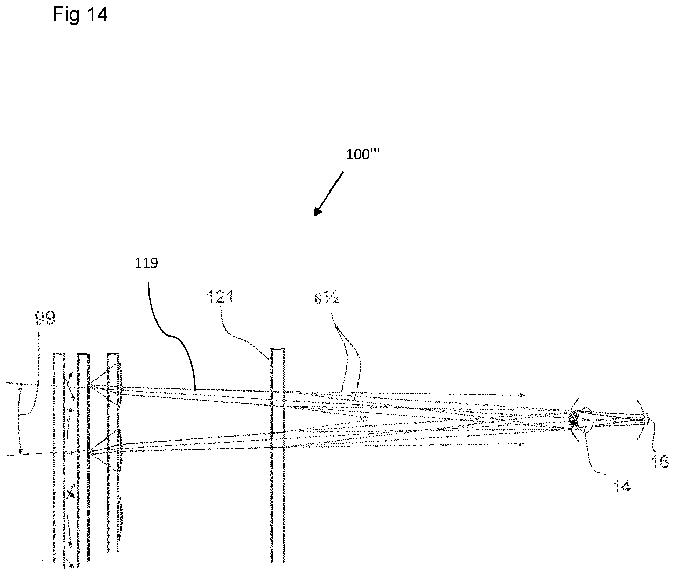

Figure 14 shows a schematic of a fourth embodiment of an artificial skylight according to the present invention;

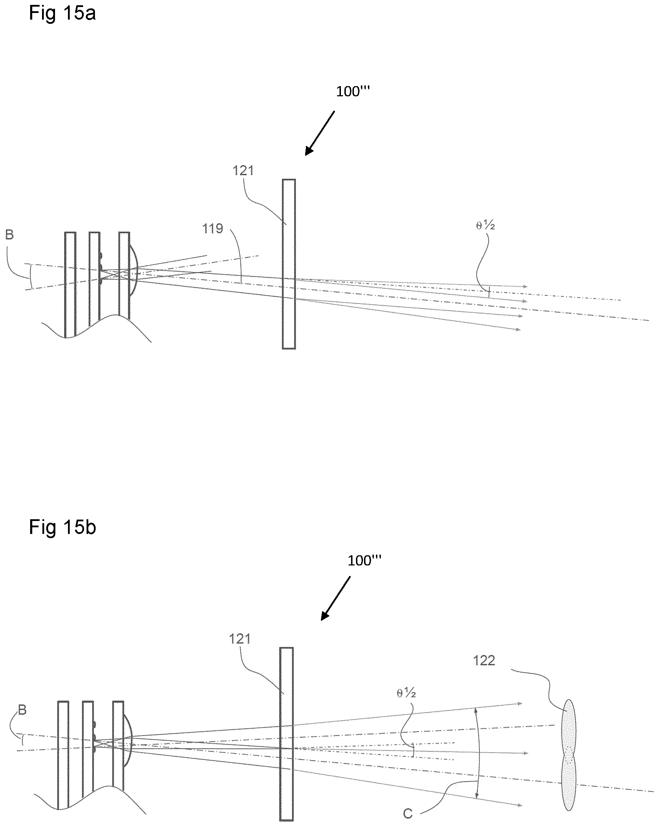

Figure 15a shows a schematic of the artificial skylight of Figure 14 in which blue features are separably resolvable;
Figure 15b shows a schematic of an artificial skylight in which a contiguous image is formed; and

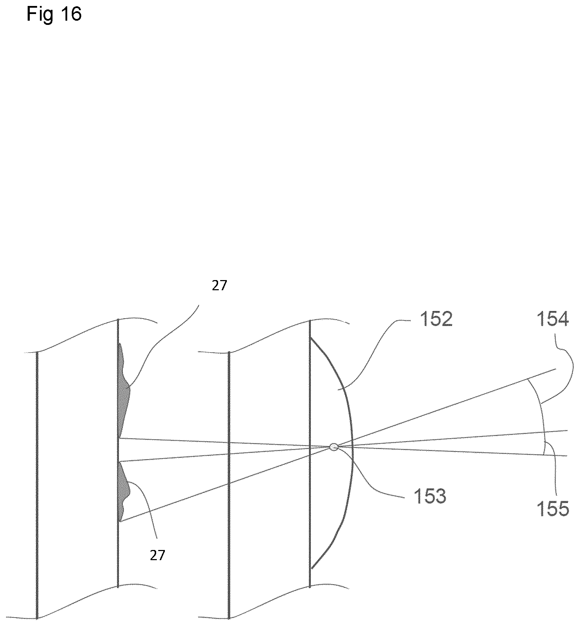

Figure 16 shows a schematic of an image and lens of the artificial skylight of Figure 14.

### DESCRIPTION OF PREFERRED EMBODIMENTS

Figures 1 and 2 show conventional integral displays of the prior art which have been discussed above. Figures 3 and 4 show modified versions of the display of Figure 1, again discussed above.

Referring now to Figure 5, an artificial skylight according to the present invention is generally shown at 100. The artificial skylight 100 displays a rendered image of a cloudy sky scene. The rendered image is an integral image. When the artificial skylight 100 is viewed by an observer, the integral image produced is perceived as being at optical infinity, much like a cloudy sky would be perceived from a real skylight. The artificial skylight 100 can be used to simulate a convincing image of a cloudy sky in a windowless space.

The artificial skylight 100 includes a light source 3. The light source 3 is a diffusive light panel which emits diffused light 6. The artificial skylight 100 includes a first layer disposed adjacent to the light source 3. The artificial skylight 100 includes a second layer disposed adjacent to the first layer.

The first layer includes a plurality of images 5. The images 5 are arranged in a first array. The images 5 are arranged in a regular geometric pattern. The images 5 include blue features 27 which represent a blue sky. The images 5 are identical to each other. The images 5 are printed features and are described in more detail with respect to Figures 6 to 10 below.

The first array is printed on a first substrate 1. The first substrate 1 is substantially transparent. In this embodiment, the first substrate 1 is substantially rigid. In this embodiment, the first substrate 1 is made from acrylic.

The second layer includes a plurality of lenses 4. The lenses 4 are arranged in a second array. The lenses 4 are arranged to correspond to the images 5 of the first layer. In other words, the images 5 are arranged in a first geometric pattern and the lenses 4 are arranged in a second geometric pattern substantially the same as the first. The arrays are repeating patterns with the same pitch, i.e. the same period of repetition. The directions along which the arrays repeat are also the same for the first and second layers. In other words, the layers and the arrays are rotationally aligned.

The second array is printed on a second substrate 2. The second substrate 2 is substantially transparent. In this embodiment, the second substrate 2 is substantially rigid. In this embodiment, the second substrate 2 is made from acrylic.

The lenses 4 substantially collimate the cones of light 7 from images 5 to produce quasi-collimated light 11 and thereby magnify the images 5 of the first layer. The lenses 4 have a diameter of less than 1.5 mm. The pitch of the lens array (i.e. the distance between centres of adjacent lenses) is between 0.2 mm to 1.5 mm.

As can be seen in Figure 6a, when viewed by an observer, the lenses 4 produce many focused images 16 on the observer's retina 15. The focused images 16 are close together (e.g. angularly separated by less than 1 arc minute) and so appear indistinguishable. Since the human eye cannot differentiate between the focused images 16, the resultant light field coerces the observer's lens 14 to adopt a shape conducive to focusing the images 16 at optical infinity. Hence the focused images 16 become merged and perceived as one rendered image positioned at optical infinity.

As can be seen in Figure 6, the merging effect occurs when the central axes of the respective light cones of common features 27 have a subtended angle 99 of less than or equal to the smallest angle of resolution in humans, which is approximately 1 arc minute. The term "common features" refers to features of arrayed images that occupy the same position in relation to the optic centre of the corresponding lens. The lenses 4 are small enough that said smallest angle of resolution (which approaches the Rayleigh criterion) is reached, provided the display is viewed at or beyond a predefined distance. With the spacing of 0.2 mm to 1.5 mm, optical infinity is achieved when the display is positioned at or more than 700 mm away from the viewer. The spacing and/or diameter of the lens required to achieve optical infinity is dependent on the distance between the lens and the observer.

It is important that the blue features 27 of a single image 5 are distinct from each other. Therefore, the subtended angle between the central axes of respective light cones of adjacent blue features 27 (more specifically, proximal edges of adjacent blue features, as shown in Figure 16) in a single image 5 should be greater than approximately 1 arc minute.

The spacing between centres of the lenses 4 is substantially the same as the spacing between centres of the images 5. In other words, the arrays have the same pitch. The arrays are also rotationally aligned so that the directions of the axes along which the repeating pattern repeats are the same for the two arrays. The pitch of the arrays is less than 1.5 mm.

Referring again to Figure 5, an aperture 45 is disposed adjacent to the second layer. The aperture 45 is a "window" through which an observer can view the artificial sky. The spacing between the first layer and second layer is selected based on the width of the aperture 45 to ensure that the rendered image 44 formed from the images 5 is repeated no more than three times within the aperture 45.

The spacing (L) between the first layer and the second layer can be calculated from the following calculation: ${J}_{2} / {J}_{1} < 4$ Where:
J₁ = Arctan (S / (2 _{*} L));
J₂ = Arctan (A / (2 _{*} D)); and
A is the maximum aperture size (i.e. the width of the panel), S is separation of the lenses 4, and D is the viewing distance.

In this embodiment, the aperture 45 has a width of approximately 600 mm and the spacing between the first layer and the second layer is approximately 4 mm.

In this embodiment, the lenses 4 are provided by droplets of clear UV ink. The droplets of clear UV ink take a convex form on the second substrate 2.

Referring now to Figure 7, the first layer is shown in more detail. The images 5 are arranged in the first geometric pattern. Each image 5 includes at least one blue feature 27. The blue features 27 are printed onto the substrate in UV ink. The blue features 27 represent the sky. The blue features 27 preferentially absorb longer wavelengths of light.

As can be seen in Figure 8a, in this embodiment the blue features 27 include a plurality of blue irregular shapes. This has been found to result in a particularly convincing image of a blue sky.

Figure 8b depicts an alternative embodiment, in which a blue feature 27' of the image 5' includes at least one blue dot. The dots have been found to be more straightforward to print using a UV printer compared to the irregular shapes.

Referring now to Figures 9 and 10, the images 5 may include one or more white features 51. The white features 51 are printed onto the first substrate 1. In this embodiment, the white features 51 include TiO₂ pigment. The white features 51 diminish the brightness of the light to produce grey areas. The grey areas represent the underside of clouds and produce a more authentic image.

Where at least some of a white feature 51 overlaps a blue feature 27 (or vice versa) the brightness is diminished further because light is absorbed and reflected by both layers. This is shown in Figure 10.

In a preferred embodiment, the overlapping blue and white features 27, 51 are arranged such that the white feature is on the side of the overlap facing the light source, with the blue feature being on the side of the overlap facing away from the light source. In this embodiment, the blue and white features are printed on the surface of the substrate facing away from the light source (the upper surface in Figure 10) and so this means that the white feature is printed first, and then the blue feature printed on top. A white feature 51 reflects a greater proportion of light 52 back towards the light source 3 compared to a blue feature 27 whereas a blue feature 27 absorbs a greater proportion of the light compared to a white feature 51. Layering the blue feature 27 over the white feature 51 provides greater light efficiency.

Referring to Figure 11, a front view of the artificial skylight 100 is shown. As can be seen, from a particular position, the collimation of light by each lens 4 magnifies part of its corresponding image 5 positioned between the lens 4 and the light source 3 to provide a magnified image 28. When viewed collectively, the artificial skylight 100 has blue (i.e. sky) regions and white (i.e. cloudy) regions. The "cloudy sky" is observed at optical infinity. Perfect or near perfect collimation is not required. Substantially reducing the divergence angle of the light passing through the lens 4 is sufficient to "concentrate" the light enough to enhance part of the corresponding image 5.

In some embodiments, the light source 3 may be a colour changing panel. It is envisaged that the light source 3 primarily emits diffuse white light, however the light source 3 can dim and change its corrected colour temperature (CCT). The CCT can vary between 1,500K and 17,000. As the CCT varies, the "sky" and "clouds" will likewise change colour, with the "clouds" displaying the greatest apparent colour shift. The change in brightness and/or colour can simulate different times of day.

The artificial skylight 100 can be manufactured by the following method.

The array of images 5 is printed onto the first substrate 1. The white features 51 are printed using TiO₂ pigment. The blue features 27 are printed in blue UV ink using a UV printer. At least a portion of at least one blue feature 27 overlaps a white feature 51 as described above.

The array of lenses 4 is printed onto the second substrate 2. The lenses 4 are printed in clear UV ink using a UV printer. The lenses 4 take a convex shape during printing.

The first substrate 1 is positioned adjacent to the light source 3. The first and second substrates 1, 2 are positioned adjacent to each other such that the two arrays are rotationally aligned as described above.

Referring now to Figure 12, an alternative embodiment of an artificial skylight according to the present invention is generally shown at 100'. In this embodiment, the first layer is provided on a first face of a substrate 50. The second layer is provided on a second, opposing face of the substrate 50. In other words, the first layer and the second layer are provided on opposing sides of the same substrate 50. As above, the first and second layers are rotationally aligned. The substrate has a thickness which provides the spacing between the layers. Similar to the first embodiment, the first face of the substrate 50 is disposed adjacent to a light source 3.

This embodiment is advantageous because printing the two layers on the same substrate 50 allows the layers to remain in rotational alignment when the substrate 50 undergoes a change in shape or position.

The artificial skylight 100' can be manufactured by a similar method as described above with respect to the first embodiment. The method differs in that the first layer is printed on the first face of the substrate 50 and the second layer is printed on the second face of the substrate 50.

To ensure rotational alignment between the arrays of features, the substrate 50 can be firmly held within or pressed against a jig such as positioning pins. The substrate 50 may be held in or against a jig during printing of the images 5. The substrate 50 can be flipped and held in the jig during printing of the lenses 4. Where positioning pins are used, the positioning pins should be well aligned with the machine's Y axis (i.e. in the "forward" and "backward" directions of a printing element).

Referring now to Figure 13, an alternative embodiment of an artificial skylight according to the present invention is generally shown at 100". As in the first embodiment, the layers are each provided on a substrate 2, 29. In this embodiment, the first substrate 29 is translatable with respect to the second substrate 2, but the layers remain parallel with each other and the arrays remain in rotational alignment - i.e. with the repeating pattern repeating along axes extending in the same directions for the two arrays.

The first substrate 29 is a flexible material. The first substrate 29 is positioned on rollers to enable the first substrate 29 to be moved with respect to the second substrate 2 in a similar manner to a conveyer belt. The first substrate 29 moving with respect to the second substrate 2 gives the impression of the "clouds" moving.

Figure 14 shows a further embodiment, in which the artificial skylight 100‴ includes a diffuser 121. The diffuser 121 is a diffuser panel. The diffuser 121 diffuses incident light 119 to create a diffuse cone of light subtending a half-value diffusion angle, θ_{½}*.*

A diffuser 121 can address the problem of subtended angles 99 exceeding one arc minute by broadening the light cones entering the eye such that the focused light cones of common features 27 overlap or adjoin, to form one rendered image 16.

This allows larger diameter lenses to be used while still achieving optical infinity. Where larger lenses are used, more detail can be included in the images 5. The first layer and second layer should however be positioned commensurately further apart, thereby making the artificial skylight 100‴ deeper and heavier than before.

Ideally, the diffuser 121 should create only the diffusion necessary to obscure common features 27 such that a single rendered image is resolved. Preferably, the level of diffusion should be sufficient to obscure the common features 27 when viewed by an observer positioned 700mm away from the artificial skylight 100‴ or further.

Furthermore, the artificial skylight 100‴ should still allow adjacent blue features 27 in each image 5 to be distinguished from each other. Figure 15a shows a lens 4 partially collimating the edges of two blue features 27 that are adjacent to each other in an image 5. An "angle of separation" is generally shown at B.

With reference to Figure 16, the term "angle of separation" can refer to the angle 155 subtending the optical axis 153 of the lens 152 and the edges of two adjacent blue features 27 and/or the angle 154 subtending the extremities of a blue feature 27 at its minimum width and the optical axis of the lens. The angle of separation B is dependent on the distances between adjacent blue features 27, the separation between the first layer and the second layer, and the focal length of the lenses 4.

Referring again to Figure 15a, if an angle of separation B between the blue features 27 relative to an optic centre of the lens 4 is greater than the half-value diffusion angle, θ_{½} by one arc minute, then adjacent blue features 27 will be separately resolvable and perceived as distinctly separate patches of blue sky at optical infinity. The blue features 27 are separately resolvable when: B ≥ θ_{½} + 0.017° (i.e. 1 arc minute) where θ_{½} ≤ 0.5°.

Diffusion cones should ideally be isotropic i.e., the diffusion cone associated with a transiting ray 119 should be symmetrical about the ray's incident angle.

Figure 15b depicts a schematic of the artificial skylight 100‴ wherein the angle of separation B is θ_{½}, i.e., less than θ_{½} + 0.017°. At this angle of separation B, adjacent blue features 27 will be resolved as one contiguous image 122 rather than distinct patches of blue sky. The occurrence of this phenomenon is a consequence of two adjacent light cones adjoining or merging to form a single, larger light cone.

Clearer images can be rendered where the differential between the separation angle B and the half-value diffusion angle θ_{½} is larger. This is particularly true where the diffuser 121 diffuses a greater proportion of the light, e.g. more than 90% of the light. However, to achieve greater angular separation B for a given separation between the first layer and second layer, either the focal length of each lens 4 has to be reduced or the distances between blue features 27 must be increased. Reducing the focal length of each lens 4 results in further image distortion whereas increasing the distances between blue features 27 reduces the amount of detail within the rendered image. In other words, a compromise is made between the amount of detail in the rendered image and the image clarity.

To ensure ideal clarity where θ½ > 0.5°, the relationship between B and θ½, is preferably, B > 1.4*θ_{½}*.* This degree of angular separation B ensures that two adjacent blue features 27 can be clearly resolved.

It is not necessary that every blue feature 27 in every image 5 has the above angles of separation **B,** however, any blue features 27 that do not will be irresolvable and will appear as one, fused image.

Where the diffuser 121 broadly diffuses the incident light and where more than 10% of the incident light is unperturbed, the above relationship between B and θ½ may not apply. This is because when a small percentage of light from an image's light cone is broadly diffused (in the most extreme case, Lambertian), it too will typically result in the obscuring of common features 27 as described above (albeit less effectively) whilst allowing adjacent blue features 27 to be separately resolvable.

In some embodiments, the diffuser 121 may include 'surface featuring', in other words, the diffuser 121 may include stippling or dimpling. Surface featuring generally produces a controlled diffusion cone of all incident light. This is preferred as it tends to diffuse adjacent blue features 27 less than substrate scattering (where rays are scattered due to embedded microparticles), assuming equal diffusion of common features 27.

In other embodiments, the diffuser 121 may include microscopic particles such as TiO₂ embedded in the diffuser 121. This allows for substrate scattering which generally creates a very broad diffusion cone albeit by perturbing a small percentage of incident light. Where substrate scattering occurs, the above relationship between B and θ½ may not apply.

In this embodiment, the diffuser is positioned between 15 to 50 mm from the second layer. It is advantageous to position the diffuser 121 a small distance from the lens array as this has the added benefit of diffusing the edges of the lenses 4 too or if they are touching, their common boundary. Hence, the viewer is presented with a smooth, artefact free display.

The embodiments described above are provided by way of example only, and various changes and modifications will be apparent to persons skilled in the art without departing from the scope of the present invention as defined by the appended claims.

## Claims

1. An artificial skylight (100) for simulating a sky scene at optical infinity, the artificial skylight comprising a panel having a first layer and a second layer, and a diffusive light source (3) for illuminating the first and second layers, in which:
the first layer comprises an array of repeating translucent and/or opaque images (5) printed on a transparent substrate; and
the second layer comprises an array of lenses (4), in which the pitch of the array of lenses is substantially the same as that of the array of images, and
in which the first layer is disposed behind the second layer, the first layer being spaced from and parallel with the second layer, and the first and second layers being relatively positioned so that the array of images is rotationally aligned with the array of lenses, and the diffusive light source being disposed behind the first layer,
and in which the artificial skylight comprises one or both of:
a) lenses (4) having a diameter of less than approximately 1.5 mm; and
b) a diffuser (121) positioned in front of the second layer for diffusing incident light that has passed through one or more of the lenses (4).

2. An artificial skylight (100) as claimed in claim 1, in which the pitch of the array of lenses is between 0.2 mm and 1.5 mm.

3. An artificial skylight (100) as claimed in claim 1 or claim 2, in which the spacing between the first layer and the second layer is between 1 mm and 8 mm.

4. An artificial skylight (100) as claimed in any preceding claim, in which the first layer is provided on a first substantially transparent substrate (1) and the second layer is provided on a second substantially transparent substrate (2).

5. An artificial skylight (100") as claimed in claimed in any preceding claim, in which one of the first and second substantially transparent substrate (1, 2) is translatable with respect to the other of the first and second substantially transparent substrate.

6. An artificial skylight (100") as claimed in claim 5, in which one of the first and second substantially transparent substrates (1, 2) is a flexible sheet disposed on one or more rollers for translating the flexible sheet with respect to the other of the first and second substantially transparent substrate.

7. An artificial skylight (100') as claimed in any of claims 1 to 3, in which the first layer is provided on one side of a substantially transparent substrate (50) and the second layer is provided on an opposing side of the same substantially transparent substrate (50).

8. An artificial skylight (100) as claimed in any preceding claim, in which a face of the panel has a surface area of between 0.2 m² and 1 m².

9. An artificial skylight (100) as claimed in any previous claim, in which the images comprise **UV** ink.

10. An artificial skylight (100) as claimed in any preceding claim, in which each image includes one or more blue dots and/or one or more irregular shapes.

11. An artificial skylight (100) as claimed in any preceding claim, in which the diffusive light source (3) has a variable corrected colour temperature (CCT) of between 1,500K and 15,000K.

12. An artificial skylight (100) as claimed in any previous claim, in which the first layer comprises an array of white features (51), optionally in which the white features comprise TiO₂ pigment.

13. A method of manufacturing an artificial skylight (100), the method comprising the steps of:
printing an array of repeating translucent and/or opaque images (5) on a translucent or transparent substrate to form a first layer;
printing an array of lenses (4) on the other side of the substrate, or on an other substrate, to form a second layer parallel with the first layer, in which the array of lenses correspond to and are rotationally aligned with the array of images to form an integral image, in which the pitch of the array of lenses is substantially the same as that of the array of images and in which the method comprises one or of the following steps:
a) printing the lenses with a diameter of less than approximately 1 mm; and
b) positioning a diffuser in front of the second layer for diffusing incident light that has passed through one or more of the lenses (4).

14. A method of manufacturing an artificial skylight (100) as claimed in claim 13, in which the lenses are printed in UV ink and in which the method comprises the step of drying the UV ink with UV light.

15. A method of manufacturing an artificial skylight (100) as claimed in claim 13 or claim 14, in which the first layer is printed on one side of a substantially transparent substrate (50) and the second layer is printed on an opposing side of the substantially transparent substrate (50).
